Europäisches Patentamt

European Patent Office

Office européen des brevets

(19)

(11) Veröffentlichungsnummer: **0 348 727**

**A1**

(12) **EUROPÄISCHE PATENTANMELDUNG**

(21) Anmeldenummer: 89110685.8

(51) Int. Cl.⁴: **F02B 37/02 , F02B 27/04**

(22) Anmeldetag: 13.06.89

(30) Priorität: 01.07.88 DE 3822199

(43) Veröffentlichungstag der Anmeldung:
03.01.90 Patentblatt 90/01

(84) Benannte Vertragsstaaten:
**DE FR GB SE**

(71) Anmelder: **Krupp MaK Maschinenbau GmbH**
**Falckensteiner Strasse 2-4**
**D-2300 Kiel 17(DE)**

(72) Erfinder: **Häfner, Reinhard, Dipl.-Ing.**
**Lärchenweg 3**
**D-2307 Dänisch-Nienhof(DE)**

(74) Vertreter: **Hansmann, Dierk, Dipl.-Ing.**
**Jessenstrasse 4**
**D-2000 Hamburg 50(DE)**

(54) **Abgasleitung für eine Mehrzylinder-Brennkraftmaschine.**

(57) Zur allgemeinen Verbesserung, auch insbesondere der Stau- Eigenschaften von Abgasleitungen für Mehrzylinder-Brennkraftmaschinen wird vorgeschlagen, die an dem einen Ende abgeschlossene, an dem anderen Ende zu weiteren Aggregaten, wie z.B. eine Abgasturbine (9) führende, an den Zylindern angeschlossene Leitung (1) aus gleichgestalteten, teilweise ineinandergeführten Leitungsteilstücken (5) zusammenzusetzen. Zur Verbindung der Leitungsteilstücke miteinander sind Wellrohr-Kompensatoren (8) und Spannschellen (15) vorgesehen. Es wird weiter vorgeschlagen, den inneren und äußeren Blechmantel einer aus Halbschalen aufgebauten, wärmeisolierden Leitungsverschalung (14) an den Spannschellen mit zu befestigen. Außerdem soll zur Verbesserung der Strömungsverhältnisse in der Abgasleitung (1), das Ende (27) des eingesteckten inneren Teilstücks einen schrägen Abschluß aufweisen, so daß sich sein vorspringender Randteil (24) als Pralldiffusor vor dem Zylinderanschluß legt. Ferner ist der Raum (21) zwischen zwei Teilstücken derart exzentrisch ausgeführt, daß sich der größere Abstand (a) an der Seite der Leitung des Zylinders ergibt.

Fig. 1

## Abgasleitung für eine Mehrzylinder-Brennkraftmaschine

Die Erfindung bezieht sich auf eine Abgasleitung für eine Mehrzylinder-Brennkraftmaschine mit einer nachgeschalteten Turbine, bestehend aus mehreren gleichgeschalteten und über einen Teil ihrer Länge ineinandergeführten Leitungsrohren, die Anschlußstutzen umfassen, welche mit Anschlußleitungen der Zylinder verbunden sind und an einem Ende der Abgasleitung einen Abgasaufnehmer und am gegenüberliegenden anderen Ende ein Abschlußstück angeordnet ist.

Aus der DE-OS 2802 515 ist eine Abgasleitung bekannt, die aus mehreren gleichen Rohrteilen zusammengesetzt ist und zwischen zwei zylindrischen Rohren im Bereich von Anschlußstutzen einen Ringraum bilden, der eine ringförmige Mündungsöffnung mit sich in Strömungsrichtung verengendem Querschnitt aufweist. Durch diese Anordnung soll die potentielle Energie mit einer größtmöglichen Strömungsgeschwindigkeit umgelenkt werden.

Aufgabe der Erfindung ist es, eine Abgasleitung für eine Brennkraftmaschine mit einer nachgeschalteten Turbine zu schaffen, bei der die aus dem Zylinderkopf austretende kinetische Energie weitestgehend verlustfrei in Druckenergie umzuwandeln ist, wobei eine möglichst gleichmäßige, schwingungsarme Strömungsgeschwindigkeit zur Turbine hin erzielbar sein soll.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile liegen darin, daß die aus dem Verbrennungsraum der Zylinder ausströmenden Gase ihre Strömungsenergie mit hohem Wirkungsgrad in Druckenergie umwandeln können. Diese Energieumwandlung erfolgt vorteilhafter Weise auf einer sehr kurzen Strömungsstrecke. Die durch die restliche Strömungsenergie bewirkte Kraft, die z.B. direkt auf eine Turbine einer Aufladegruppe gerichtet ist, läßt sich auch im Teillastbetrieb zu einer schnellen Beschleunigung der Brennkraftmaschine nutzen. Durch die sich ergebende gleichmäßige und schwingungsarme Strömung zur Turbine hin, ist ein relativ hoher Turbinenwirkungsgrad zu erzielen.

Zu den weiteren vorteilhaften Möglichkeiten, die sich durch die erfindungsgemäße Führung der Leitungsrohre ineinander ergeben, gehört, daß in der Abgasleitung eine fast nicht turbulente, laminare Strömung herrscht, wodurch sich die Sicherheit bei der Auslegung einer Abgasturbine erhöht.

Durch eine Verbindung der Leitungsrohre über Wellrohr-Kompensatoren mit Spannschellen wird einerseits eine gute gegenseitige Führung der Rohre gewährleistet und andererseits wird erreicht, daß die verbindenden Wellrohr-Kompensatoren frei von lateraler Deformation bleiben und die Möglichkeit zur Wärmeausdehnungsänderung bei Anpassung an ein anderes Temperaturniveau begünstigt wird.

Der Aufbau der Leitungsrohre aus Halbschalen und deren Verbindung ergibt eine Abgasleitung, deren Verschalung ohne Verwendung von Schrauben schnell montier- oder demontierbar ist und auf der eine niedrige Oberflächentemperatur herrscht und die spritzdicht ist.

Ein Ausführungsbeispiel der Erfindung ist in der Zeichnung schematisch dargestellt und wird im folgenden näher beschrieben. Es zeigen:

Fig. 1 einen Längsschnitt durch einen ersten Teil einer Abgasleitung, die am freien Ende über eine Konsole motorseitig abgestützt ist,

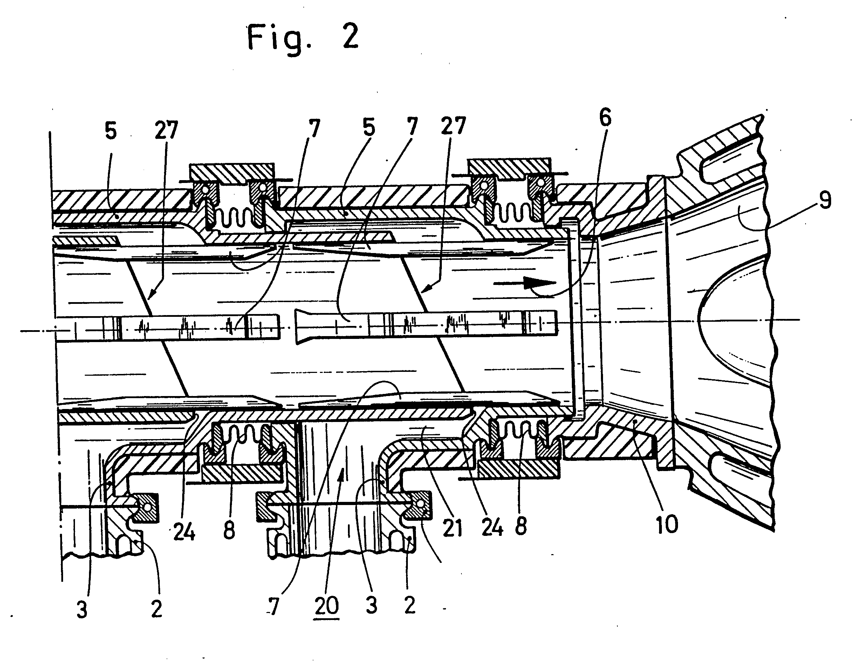

Fig. 2 einen Längsschnitt durch einen an die Abgasleitung gemäß Fig. 1 zweiten anschließenden weiteren Teil, der mit einer Abgasturbine verbunden ist und

Fig. 3 einen Querschnitt durch eine Abgasleitung gemäß Fig. 1 im Bereich eines Anschlußstutzens.

Die dargestellte Anordnung zeigt eine Abgasleitung 1 für eine Brennkraftmaschine, die mit von Zylindern angehenden Anschlußleitungen 2 verbundene Anschlußstutzen 3 umfaßt, die über Spannschellen 4 miteinander verbunden sind.

Die Abgasleitung 1 umfaßt im wesentlichen mehrere gleichgestaltete zylindrische Leitungsrohre 5 ist jeweils einem im Durchmesser größeren Abschnitt mit dem Anschlußstutzen 3 und einem im Durchmesser kleineren anschließenden Abschnitt. Die Leitungsrohre 5 sind zur Bildung der Abgasleitung zum Teil ineinandergesteckt, wobei in Strömungsrichtung 6 der Abgase gesehen, das vordere im Durchmesser kleinere Rohrteil des Leitungsrohres 5 jeweils in das anschließende, im Durchmesser größere Rohrstück des Leitungsrohres der Abgasleitung 1 gesteckt wird. Die Rohre 5 sind jeweils zueinander in Axialrichtung verschiebbar geführt, wozu sich am Umfang des eingesteckten Rohres 5 jeweils ein Abschnitt des aufgeschobenen weiteren Rohres 5 abstützt.

An seinem vorderen Ende - in Bezug auf die Strömungsrichtung 6 der Abgase - weist das eingesteckte Rohr 5 nach innen vorragende Rippen 7 auf, die umfangsseitig verteilt angeordnet sind und die das aufgeschobene Rohr 5 im Bereich seines vorderen Abschnitts mit kleinerem Durchmesser d hält. Die Rohre 5 sind in der Weis zueinander gehalten, daß sie sich bei einer Wärmedehnung entsprechend axial verschieben können. Die dargestellte Abgasleitung 1 wird z.B. aus im wesentlichen vier gleichgestalteten Rohren 5 gebildet, wobei das endseitige Rohr 5 über ein Abschlußelement 11 abgeschlossen ist und das vordere Rohr 5 mit einem Abgasaufnehmer 10 versehen wird, der an die Turbine 9 angeschlossen ist.

Die einzelnen Rohre 5 sind unter Zwischenschaltung von Wellrohrkompensatoren 8 über Spannschellen 15 miteinander verbunden. Durch die Führung der einzelnen Rohre 5 in- und aufeinander ist einerseits dafür gesorgt, daß die Wellrohrkompensatoren 8 sich nur in Längsrichtung und nicht in Querrichtung verformen können und andererseits wird über die Wellrohrkompensatoren 8 eine gegenseitige Verschieblichkeit der Rohre 5 zur Aufnahme von Wärmedehnungen ausgeglichen.

Zum Anschluß an eine Turbine 9 ist die Abgasleitung 1 mit einem gegenüber den anderen Rohren 5 verkürzten letzten Rohr 5 versehen, das mit dem Abgasaufnehmer 10 verbunden ist, der mit einem sich gleichmäßig vergrößernden Abschnitt die Abgase zur Turbine 9 führt.

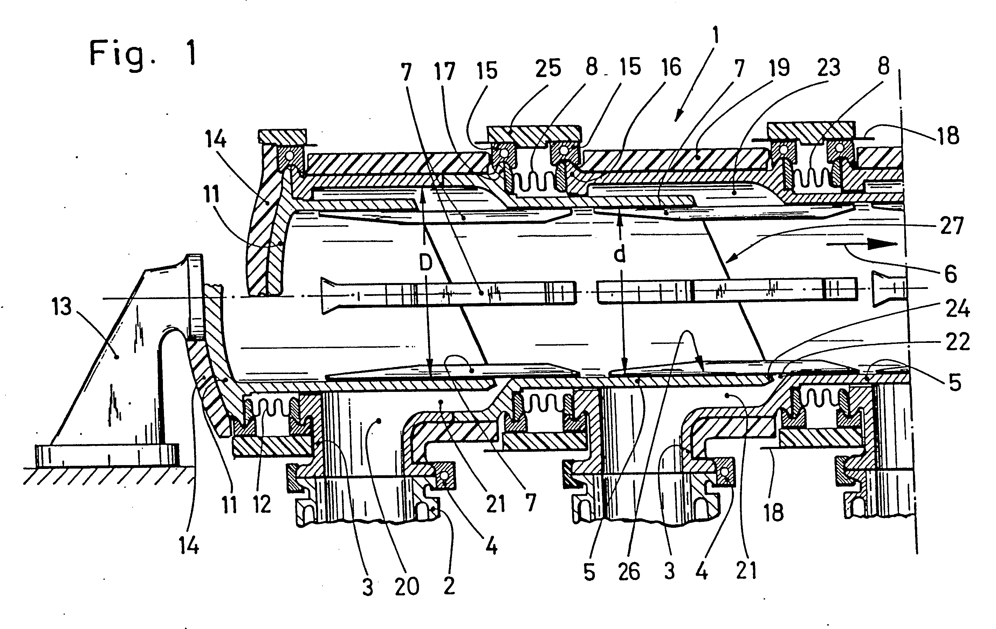

Auf der Turbine 9 abgewandten Seite der Abgasleitung 1 wird gemäß Fig. 1 das endseitige erste Rohr 5 durch ein Abschlußstück 11 abgeschlossen, das z.B. über eine Konsole 13 am Motorgehäuse abgestützt ist.

Gemäß einer in Fig. 1 dargestellten Variante der Ausführung einer Abgasleitung 1 kann zwischen dem letzten Rohr 5 und dem Abschlußstück 11 ein Wellrohrkompensator 12 angeordnet sein.

Zur Wärmeisolierung der Abgasleitung 1 ist eine aus Halbschalen zusammengesetzte Leitungsverschalung 14 vorgesehen, wobei die Abschlüsse von inneren und äußeren Blechmänteln gemeinsam mit dem Wellrohrkompensator 8 über zwei Spannschellen 15 verbunden werden, die konische Aufnahmeflächen aufweisen, welche konisch ausgebildete Flanschen 16, 17 von benachbarten Rohren 5 übergreifen. Im Bereich der Wellrohr-Kompensatoren 8 ist eine zweigeteilte Manschette 25 über die beiden Spannschellen 15 geschlungen. Durch überragende Bleche 18 und der Manschette 25 wird ein Eindringen von brennbaren Materialien verhindert. Das Abschlußstück 11 ist durch ein Verschalungselement 19 abgedeckt.

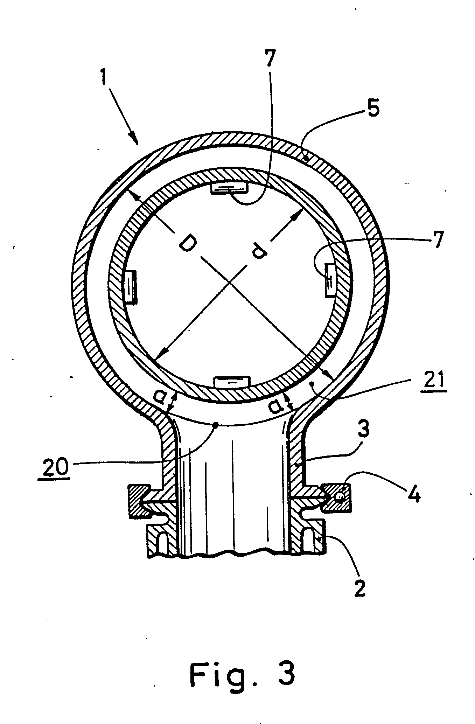

Der Querschnitt der Leitung 2 des Zylinders weist zum Querschnitt des Rohres 5 der Abgasleitung 1 ein Flächenverhältnis von 1: 3 bis 1 : 5 auf. Die Querschnittsfläche der Leitung 2 entspricht der Querschnittsfläche des anschließenden Anschlußstutzens 3 und bleibt bis zum Mündungsbereich 20 in das Rohr unverändert. Anschließend erweitert sich dieser Bereich 20 zu einem im Querschnitt ringförmigen Raum 21, bei dem der eine Abschnitt des Rohres 5 mit großem Durchmesser D den Abschnitt des weiteren Rohres 5 mit kleinerem Durchmesser d exentrisch umgibt (Fig. 3). Da außerdem das eingesteckte Rohr 5 am freien Ende 27 jeweils schräg abgeschnitten ist, in der Weise, daß sich die große Fläche mit dem am weitesten vorspringenden Randteil 24 vor die Öffnung (Raum 21) des Anschlußstutzens 3 legt, wirkt die im Mündungsbereich 20 auftretende Querschnittsveränderung auf einen gegenüber der Eintrittsfläche etwa doppelt so großen Strömungsquerschnitt als eine Kombination aus Querschnittsumlenkung und Pralldiffusor. Die der großen Fläche gegenüberliegende kleinere Fläche bildet einen Mündungsbereich 23 für die Strömung in die Leitung.

Das Abgas in dem Mündungsbereich 20 verteilt sich im exzentrischen Ringraum 21 und strömt durch den mit 22 und 23 gezeichneten Mündungsraum in die Abgasleitung 1.

Die Querschnittsfläche des Mündungsraumes 22, 23 ist dabei so ausgelegt, daß die dort herrschende Strömungsgeschwindigkeit etwa der halben Geschwindigkeit in der Leitung 2 am Zylinder entspricht, wobei der Verlauf der Mündungsräume 22 und 23 so ausgelegt ist, daß einerseits eine volle Umlenkung der Strömung im Mündungsräumen 22 und 23 auftreten. Die restliche Strömungsenergie der aus diesen Räumen austretenden Strömung bewirkt eine gut auf die Turbine 9 ausgerichtete Kraft, so daß sich selbst bei kleiner Abgasmenge, wenn es noch auf die Nutzung der Stoßellen kurz nach dem Ventil- bzw. Schlitzöffnen ankommt, ein guter Wirkungsgrad der Aufladegruppe ergibt.

## Ansprüche

1. Abgasleitung für eine Mehrzylinder-Brennkraftmaschine mit einer nachgeschalteten Turbine, bestehend aus mehreren gleichgeschalteten und über einen Teil ihrer Länge ineinandergeführten Leitungsrohren, die Anschlußstutzen umfassen, welche mit Anschlußleitungen der Zylinder verbunden sind und an einem Ende der Abgasleitung einen Abgasaufnehmer und am gegenüberliegenden anderen Ende ein Abschlußstück angeordnet ist, dadurch gekennzeichnet, daß der Anschlußstutzen (3) eines ersten Leitungsrohres (5) in einen Ringraum (21) einmündet, der zwischen diesem Leitungsrohr und einem freien vorderen Ende (26) eines eingesteckten zweiten benachbarten Leitungsrohres (5) gebildet wird, das ein schräg abgeschnittenes zylindrisches Rohrende (27) umfaßt, welches mit seiner großen Fläche als Pralldiffusor vor der Einströmöffnung des Stutzens (3) liegt und mit seiner kleineren, dem Stutzen (3) gegenüberliegenden Fläche einen Mündungsraum (23) zwischen den beiden Leitungsrohren bildet, wobei das eingesteckte zweite Leitungsrohr exzentrisch zum weiteren Leitungsrohr angeordnet ist und der Bereich des Stutzens (3) einen größeren Abstand (a) als im übrigen Ringraum (21) aufweist.

2. Abgasleitung nach Anspruch 1, dadurch gekennzeichnet, daß die Leitungsrohre (5) auf ihrer Außenkontur jeweils ein anschließendes Leitungsrohr führen und an ihrer Innenkontur vorragende axiale Rippen (7) aufweisen, die mit einer für die Wärmedehnung ausreichenden Lose das anschließende Leitungsrohr innenseitig abstützen.

3. Abgasleitung nach den Ansprüchen 1 und 2, dadurch gekennzeichnet, daß zwischen den Leitungsrohren (5) Wellrohr-Kompensatoren (8) vorgesehen sind, die mit den Leitungsrohren über Spannschellen (15) verbindbar sind.

4. Abgasleitung nach einem oder mehreren der vorhergehenden Ansprüche, dadurch gekennzeichnet, daß die einzelnen Rohre (5) der Abgasleitung (1) von einer aus Halbschalen aufgebauten Leitungsverschalung (14) umgeben sind, deren Blechmantel über die Spannschellen (15) mit eingespannt sind und daß diese sowie die Kompensatoren (8) von einer zweigeteilten Manschette (25) übergriffen sind, die überragende Bleche (18) aufweisen.

5. Abgasleitung nach Anspruch 4, dadurch gekennzeichnet, daß am Ende der Abgasleitung (1) ein, durch ein Wellrohr (12) elastisch aufgenommenes ein dem zylindrischen Teilstück entsprechendes Abschlußstück (11) mit einem Verschalungselement (19) vorgesehen ist, wobei sich das Abschlußstück (11) über eine Konsole (13) an der Maschine abstützt.

6. Abgasleitung nach einem oder mehreren der vorhergehenden Ansprüche, dadurch gekennzeichnet, daß endseitig der Abgasleitung (1) eine Turbine (9) angeschlossen ist.

Fig. 1

EP 0 348 727 A1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-1 140 026 (DE LAVAL STEAM TURBINE COMPANY) <br> * Spalte 3, Zeile 59 - Spalte 4, Zeile 19, Figur 1 * <br> --- | 1,6 | F 02 B 37/02 <br> F 02 B 27/04 |
| A | FR-A-2 464 366 (SOCIETE D'ETUDES DE MACHINES THERMIQUES) <br> * Seite 4, Zeile 7 - Seite 5, Zeile 25; Figur 1 * <br> --- | 1,3,4 | |
| D,A | DE-A-2 802 515 (SOCIETE D'ETUDES DE MACHINES THERMIQUES) <br> * Seite 15, Zeilen 20-32; Seite 17, Zeile 23 - Seite 18, Zeile 3; Figuren 1,5 * <br> --- | 1,3,6 | |
| A | EP-A-0 210 100 (ETAT-FRANCAIS) <br> * Spalte 19, Zeilen 11-42; Figur 9 * <br> ----- | 1,3,6 | |
| | | | **RECHERCHIERTE SACHGEBIETE (Int. Cl.5)** <br><br> F 02 B |

Der vorliegende Recherchenbericht wurde für alle Patentansprüche erstellt

| Recherchenort | Abschlußdatum der Recherche | Prüfer |
|---|---|---|
| BERLIN | 13-09-1989 | NOVELLI B. |